Europäisches Patentamt

European Patent Office

Office européen des brevets

(11) Veröffentlichungsnummer: **0 286 789**
**A2**

## (12) EUROPÄISCHE PATENTANMELDUNG

(21) Anmeldenummer: 88101526.7

(22) Anmeldetag: 03.02.88

(51) Int. Cl.⁴ **B01D 5/00 , B01D 3/08**

(30) Priorität: 16.04.87 DE 3712925

(43) Veröffentlichungstag der Anmeldung:
**19.10.88 Patentblatt 88/42**

(84) Benannte Vertragsstaaten:
**BE CH DE FR GB IT LI NL**

(71) Anmelder: **JANKE & KUNKEL GMBH & CO. KG**
**IKA-Werk Neumagenstrasse 27**
**D-7813 Staufen(DE)**

(72) Erfinder: **Siegel, Helmut**
**St.-Trudpert-Strasse 1**
**D-7812 Bad Krozingen(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**D-7800 Freiburg(DE)**

(54) **Kühler insbesondere für Rotationsverdampfer.**

(57) Ein Kühler (1) insbesondere für Rotationsverdampfer, weist wenigstens eine in einem Kühlgefäß (2) befindliche schraubenlinienförmige Kühlschlange auf, die eine zentrale, vom Kühlereintritt zum Kühleraustritt sich erstreckende Durchgangsöffnung (10) hat. Innerhalb dieser Durchgangsöffnung (10) ist eine kühlmitteldurchflossener Strömungsführungskörper (11) angeordnet. Dieser besteht vorzugsweise aus einem sich etwa über die Länge der Durchgangsöffnung erstreckenden Rohr, das in vorzugsweise regelmäßigen Abständen etwa kugelförmige Aufbauchungen (12) hat. Der Strömungsführungskörper (11) verhindert einerseits ein direktes Durchschießen von Dampf durch die Durchgangsöffnung (10) und die Aufbauchungen (12) sorgen für ein Umlenken der Dampfströmung etwa radial nach außen in den Bereich der Kühlschlange(n). Dadurch ergibt sich ein wesentlich erhöhter Wirkungsgrad des Kühlers und auch geringere Dampfverluste.

## Kühler insbesondere für Rotationsverdampfer

Die Erfindung betrifft einen Kühler insbesondere für Rotationsverdampfer, mit wenigstens einer in einem Kühlgefäß befindlichen Kühlmittelführung, wobei der Dampfdurchtritt eine zentrale, vom Kühlereintritt zum Kühleraustritt sich erstreckende Durchgangsöffnung aufweist. Solche Kühler sind in unterschiedlichsten Ausführungsformen auch hinsichtlich der Kühlmittelführung bekannt. Bei solchen Kühlern ist an den Kühleraustritt eine Vakuumpumpe angeschlossen, um den beim Erwärmen der Vorlage entstehenden Dampf in den Kühler zu transportieren. Problematisch ist hierbei, daß nicht vollständig vermieden werden kann, daß Dampf beim Kühler austritt und mitabgefördert wird. Man kann dies zwar reduzieren, indem die Saugleistung vermindert wird, jedoch hat dies zur Folge, daß entsprechend auch die Destillationsgeschwindigkeit abnimmt.

Um solche Dampfverluste zu reduzieren, können auch Kühler großer Bauform, insbesondere in Längsrichtung verwendet werden. Häufig sind diese aber aus den vorgegebenen Platzverhältnissen nicht einsetzbar und sie sind auch schlecht handhabbar.

Eine weitere Maßnahme zur Reduzierung des Dampfverlustes besteht auch noch darin, Kühlmittel mit sehr niedriger Temperatur dem Kühler zuzuführen. Dazu ist jedoch in aufwendiger Weise meist ein Kälteaggregat erforderlich. Häufig ist es dagegen erwünscht, mit üblichem Leitungswasser als Kühlmedium auszukommen. Die Kühler der eingangs erwähnten Art weisen, wie bereits erwähnt, eine zentrale, vom Kühlereintritt zum Kühleraustritt sich erstreckende Durchgangsöffnung auf, durch die in unerwünschter Weise ein direkter Dampfdurchtritt begünstigt ist. Man hat bei solchen Kühlern auch schon in der Nähe des Kühleraustrittes Temperatursensoren eingesetzt, durch die ein Austritt von Dampf vermieden werden soll, indem z.B. die Saugleistung reduziert wird, wenn die Dampffront den Sensor erreicht. Durch die vorhandene Durchgangsöffnung ist dies jedoch problematisch, da der Dampf mit hoher Geschwindigkeit durch die kaminartige Durchgangsöffnung hinduchschießt, so daß für ein rechtzeitiges Reagieren vor Austritt von Dampf aus dem Kühleraustritt zu wenig Zeit verbleibt.

Aufgabe der vorliegenden Erfindung ist es, einen Kühler der eingangs erwähnten Art zu schaffen, bei dem Dampfverluste und somit auch Lösungsmittelverluste unter Vermeidung der vorerwähnten Nachteile zumindest wesentlich reduziert sind. Dabei soll trotz kompakter Bauform des Kühlers eine hohe Destilliergeschwindigkeit möglich sein.

Zur Lösung dieser Aufgabe wird erfindungsgemäß insbesondere vorgeschlagen, daß innerhalb der Durchgangsöffnung in dem Kühler ein kühlmitteldurchflossener Strömungsführungskörper angeordnet ist. Die Durchgangsöffnung ist dadurch in einem Teilquerschnitt durch den Strömungsführungskörper ausgefüllt, so daß ein sonst vorhandener "Kamineffekt" mit vergleichsweise hohen Dampfverlusten sich hier nicht ausbilden kann.

Außerdem ist zusätzlich durch den kühlmitteldurchflossenen Strömungsführungskörper die Dampfkondensationsfläche des Kühlers vergrößert. Der Kühler ermöglicht auch bei vergleichsweise kurzer Bauform eine hohe Destillationsgeschwindigkeit.

Zweckmäßigerweise ist der Strömungsführungskörper als sich vorzugsweise etwa über die gesamte Länge der Durchgangsöffnung erstreckendes Rohr ausgebildet, das in den Kühlmittellauf der Kühlmittelführung bzw. der Kühlschlange einbezogen ist. Dadurch wird der vorhandene Platz gut ausgenützt.

Eine besonders vorteilhafte Ausgestaltung sieht vor, daß der insbesondere durch ein Rohr gebildete Strömungsführungskörper mehrere, vorzugsweise der Anzahl der Windungen der Kühlschlange etwa entsprechende Aufbauchungen aufweist, die so angeordnet bzw. ausgebildet sind, daß eine Strömungsumlenkung in den Bereich zwischen benachbarte Kühlschlangenwindungen erfolgt. Durch diesen Strömungsführungskörper wird der an seinem Außenmantel entlangströmende Dampf im Bereich zwischen den Kühlschlangenwindungen etwa radial nach außen abgeleitet und somit zusätzlich auch aus diesem zentralen Bereich den Kühlschlangen zugeführt. Dadurch kann die Wirksamkeit des Kühlers insgesamt wesentlich verbessert werden.

Zweckmäßigerweise sind die Aufbauchungen dabei etwa kugelförmig und jeweils in Höhe einer Kühlschlangenwindung angeordnet. Der Strömungsführungskörper ist dadurch vergleichsweise einfach herstellbar und es ergeben sich in erwünschter Weise jeweils bei den Aufbauchungen Strömungsumlenkungen in etwa radialer Richtung zu den Kühlschlagen hin.

Nach einer Weiterbildung der Erfindung ist vorgesehen, daß die lichten Durchtrittsabstände zwischen den Aufbauchungen des Strömungsführungskörpers und den jeweils benachbarten Kühlschlangenwindungen und vorzugsweise auch zwischen diesen und der Gefäßwand wenige Millimeter, vorzugsweise höchstens zwei Millimeter betragen. Durch diese vergleichsweise geringen Abstände wird ein intensives Umströmen der kühlmittelführenden Teile erreicht, wobei in Verbindung mit dem Strömungsführungskörper gerade durchgängige Kanäle zwischen Kühlereintritt und Kühleraustritt vermieden werden.

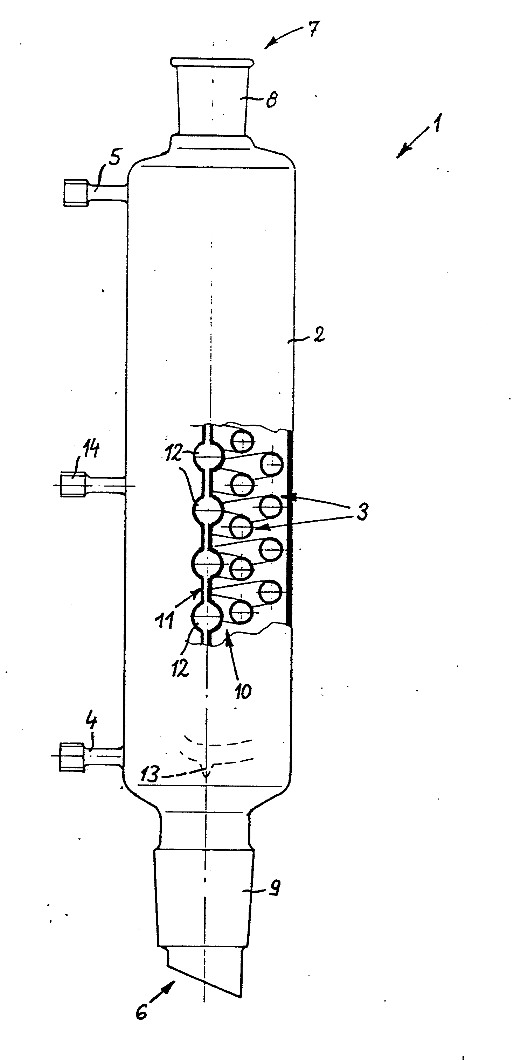

Zusätzliche Ausgestaltungen der Erfindung sind in den weiteren Unteransprüchen ausgeführt. Nachstehend ist die Erfindung mit ihren wesentlichen Einzelheiten anhand der Zeichnung in einem Ausführungsbeispiel noch näher erläutert.

Es zeigt die einzige Figur:

Eine zum Teil aufgebrochene Seitenansicht eines Kühlers.

Ein in der Figur gezeigter Kühler 1 ist hier als Senkrechtkühler für einen Rotationsverdampfer ausgebildet. Er weist ein Kühlergefäß 2 auf, in dem sich als Kühlmittelführung mehrere Kühlschlangen 3 befinden. Im Ausführungsbeispiel sind zwei Kühlschlangen mit unterschiedlichem Durchmesser und in Höhenlage gegeneinander versetzt angeordneten Windungen vorgesehen. Diese Kühlschlangen sind miteinander verbunden und hintereinander geschaltet. An den Enden des Kühlergehäuses 2 befinden sich mit den Kühlschlangen verbundene Kühlwasseranschlüsse 4 und 5. Ein Dampfeintritt 6 in das Kühlergahäuse 2 befindet sich am unteren Ende von diesem, während der Dampfaustritt 7 am oberen Ende des Kühler gehäuses 2 angeordnet ist. Beim Ein-und Austritt befinden sich in üblicher Weise als Anschlüsse eine Schliffhülse 8 bzw. ein Schliffkern 9.

Zentral innerhalb des Kühlergehäuses 2 befindet sich eine von der Seite des Dampfeintrittes 6 zu der Seite des Dampfaustrittes 7 sich erstreckende Durchgangsöffnung 10 zentral innerhalb der inneren Kühlschlange. Erfindungsgemäß ist vorgesehen, daß innerhalb dieser Durchgangsöffnung 10 in dem Kühler ein kühlmitteldurchflossener Strömungsführungskörper 11 angeordnet ist. Dieser ist vorzugsweise als sich etwa über die gesamte Länge der Durchgangsöffnung erstreckendes Rohr ausgebildet, welches Aufbauchungen 12 aufweist, die so angeordnet bzw. ausgebildet sind, daß eine Strömungsumlenkung in den Bereich zwischen benachbarte Kühlschlangenwindungen erfolgt. Durch diese Anordnung des Strömungsführungskörper 11 innerhalb der Durchgangsöffnung 10 und auch durch die Aufbauchungen 12 wird verhindert, daß beim Dampfeintritt 6 zugeführter Dampf im direkten Weg die Durchgangsöffnung 10 durchströmt. Der Strömungsführungskörper 11 ist mit in den Kühlkreislauf einbezogen und mit den beiden Kühlschlangen 3 strömungsmäßig in Reihe geschaltet. Dadurch ist zusätzlich auch die wirksame Kondensationsfläche vergrößert.

Wie in der Figur erkennbar, sind die Aufbauchungen 12 etwa kugelförmig ausgebildet, wodurch sich eine einfache Herstellbarkeit ergibt und auch die erwünschte Strömungsumlenkung aus dem zentralen Bereich in den Bereich der Kühlschlangen 3. Die lichten Durchtrittsabstände zwischen diesen Aufbauchungen 12 des Strömungsführungskörpers 11 und den jeweils benachbarten Kühlschlangenwindungen beträgt wenige Millimeter, vorzugsweise 2 mm. Auch der Abstand der einzelnen Kühlschlangenwindungen zueinander und auch zwischen den benachbarten Kühlschlangen und auch zu der Gefäßwand ist entsprechend bemessen. In der Figur ist noch angedeutet, daß sich im unteren Bereich des kühlmitteldurchflossenen Kondensators, vorzugsweise beim unteren Ende des Strömungsführungskörpers 11 eine Abtropfnase 13 befindet. Durch diese Abtropfnase können bei der Destillation anfallende Brüden gezielt an dieser Stelle abtropfen, ohne daß sie in unerwünschter Weise an der Innenwand über Schliffanschlüsse od. dgl. entlanglaufen. Durch die Abtropfnase 13 können die Brüden von dieser Stelle direkt wieder in die Vorlage gelangen.

Erwähnt sei noch, daß bei dem erfindungsgemäßen Kühler 1 auch gut ein in das Kühlergefäß ragender Meßfühler eingesetzt werden kann, weil bei Verwendung des Strömungsführungskörpers 11 ein direktes Durchschießen des Dampfes vermieden wird, so daß genügend Zeit zum meßtechnischen Erfassen der "Dampffront" vorhanden und dann entsprechende Gegenmaßnahmen gut möglich sind. Ein solcher Meßfühler, beispielsweise ein Temperaturfühler könnte bei dem mittleren Anschluß 14 eingesetzt werden.

Insgesamt sind durch die erfindungsgemäßen Maßnahmen, insbesondere durch den Strömungsführungskörper 11, folgende wesentliche Vorteile vorhanden:

Eine erhebliche Reduzierung von Dampf-bzw. Lösungsmittelverlusten und damit eine weitgehende Vermeidung von Emissionen;

erhöhter Wirkungsgrad des Kühlers und damit auch die Möglichkeit, den Kühler kurz und kompakt auszubilden;

Verwendbarkeit von üblichem Leitungswasser als Kühlmittel und damit Vermeidung von sonst häufig erforderlichen Kälteaggregaten.

Der erfindungsgemäße Kühler 1 kann, wie in der Figur gezeigt, als Senkrechtkühler für Rotationsverdampfer, jedoch auch als Schrägkühler ausgebildet sein.

Alle in der Beschreibung, den Ansprüchen und der Zeichnung dargestellten Merkmale können sowohl einzeln als auch in beliebiger Kombination miteinander erfindungswesentlich sein.

## Ansprüche

1. Kühler, insbesondere für Rotationsverdampfer mit wenigstens einer in einem Kühlergefäß befindlichen Kühlmittelführung, vorzugsweise - schraubenlinienförmigen Kühlschlangen, wobei der Dampfdurchtritt eine zentrale, vom Kühlereintritt zum Kühleraustritt sich erstreckende Durchgangsöffnung aufweist, **dadurch gekennzeichnet,** daß innerhalb der Durchgangsöffnung (10) in dem Kühler (1) ein kühlmitteldurchflossener Strömungsführungskörper (11) angeordnet ist.

2. Kühler nach Anspruch 1, dadurch gekennzeichnet, daß der Strömungsführungskörper (11) als sich vorzugsweise etwa über die gesamte Länge der Durchgangsöffnung (10) erstreckendes Rohr ausgebildet ist, das in den Kühlmittellauf der Kühlmittelführung bzw. der Kühlschlange(n) einbezogen ist.

3. Kühler nach Anspruch 1 oder 2, dadurch gekennzeichnet, daß der insbesondere durch ein Rohr gebildete Strömungsführungskörper (11) mehrere, vorzugsweise der Anzahl der Windungen der Kühlschlange etwa entsprechende Aufbauchungen (12) aufweist, die so angeordnet bzw. ausgebildet sind, daß eine Strömungsumlenkung in den Bereich zwischen benachbarte Kühlschlangenwindungen erfolgt.

4. Kühler nach einem der Ansprüche 1 bis 3, dadurch gekennzeichnet, daß die Aufbauchungen (12) etwa kugelförmig sind und insbesondere jeweils etwa in Höhe einer Kühlschlangenwindung angeordnet sind.

5. Kühler nach einem der Ansprüche 1 bis 4, dadurch gekennzeichnet, daß die lichten Durchtrittsabstände zwischen den Aufbauchungen (12) des Strömungsführungskörpers (11) und den jeweils benachbarten Kühlschlangenwindungen und vorzugsweise auch zwischen diesen und der Gefäßwand, wenige Millimeter, vorzugsweise höchstens 2 mm betragen.

6. Kühler nach einem der Ansprüche 1 bis 5, wobei als Kühlmittelführung mehrere Kühlschlangen ineinandergreifend vorgesehen sind, dadurch gekennzeichnet, daß der lichte Durchtrittsabstand zwischen benachbarten Windungen der Kühlschlangen wenige Millimeter, vorzugsweise gleich oder weniger als 2 mm beträgt.

7. Kühler nach einem der Ansprüche 1 bis 6, dadurch gekennzeichnet, daß an dem unteren Ende vorzugsweise des Strömungsführungskörpers (11), ggfs. einer Kühlschlange, eine zentral zum Kühlgefäß angeordnete Tropfnase (13) vorgesehen ist.

8. Kühler nach einem der Ansprüche 1 bis 7, dadurch gekennzeichnet, daß im austrittsnahen Bereich des Kühlergefäßes (2) ein Temperatursensor angeordnet ist.